# EUROPEAN PATENT APPLICATION

(11) **EP 4 614 963 A1**
(43) Date of publication of application: **10.09.2025**
(21) Application number: 25160896.4
(22) Date of filing: 28.02.2025
(51) Int. Cl.: H04N 7/18, H04N 17/00, H04N 23/661

(54) **BUILDING CONTROL DEVICE WITH HEALTH MONITOR**

(30) Priority: 05.03.2024 US 202418595979
(71) Applicant: Honeywell International Inc., Charlotte, NC 28202 (US)
(72) Inventor: JOSEPH, Jeslin Paul, Charlotte, 28202 (US); MADHUSUTHANAN, Sunil, Charlotte, 28202 (US); D, Sivasanthanam, Charlotte, 28202 (US); RAJAMANICKAM, Dinesh Babu, Charlotte, 28202 (US); RAMARAJ, Vignesh, Charlotte, 28202 (US); JOSEPH, Kingslin, Charlotte, 28202 (US); JAIN, Abhisekh, Charlotte, 28202 (US)
(74) Representative: Haseltine Lake Kempner LLP

(57) **Abstract**

A building control device includes a controller that is configured to receive one or more sensed parameters from one or more sensors, generate an output based at least in part on the sensed parameters, and send the output onto a network via a network interface, and execute a health status algorithm. The health status algorithm is configured to monitor a plurality of health parameters associated with the operation of the building control device, wherein the health parameters include health parameters indicative of the health of hardware components and health parameters indicative of the health of software components. The health status algorithm is configured to send an alert onto the network via the network interface when one or more of the plurality of health parameters is found to cross a corresponding threshold.

## Description

### TECHNICAL FIELD

The present disclosure relates generally to building control devices, and more particularly to building control devices with health monitoring.

### BACKGROUND

Building control systems include a number of building control devices. Over time, the performance of a building control device may become reduced for a variety of different reasons. Because a building may include a large number of building control devices, it can be difficult for someone to track the performance of each of the building control devices in order to ascertain when a particular building control device may require maintenance in order to keep the particular building control device healthy and performing according to specifications. A video camera is an example of a building control device, and a single video camera may have multiple software processes running on the single video camera. One or more of these processes may stop working (e.g. a video analytics process), meaning for example that a video camera may be producing a video stream but is not performing any video analytics on that video stream. As a result, a potential event may not be recognized by the video analytics and not reported. What would be desirable are improved methods and systems for monitoring the health of building control devices such as video cameras, fire panels, security panels, and HVAC panels.

### SUMMARY

The present disclosure relates generally to building control devices, and more particularly to building control devices having a health status algorithm. An example may be found in a video camera. The illustrative video camera includes a memory, a network interface for communicating over a network, an image capture sensor for capturing a video stream, a housing and a controller that is operatively coupled to the memory, the network interface and the image capture sensors. The controller is configured to receive the video stream from the image capture sensor, generate an output based at least in part on the video stream, send the output onto the network via the network interface, and to execute a health status algorithm. The health status algorithm is configured to monitor each of a plurality of health parameters associated with the operation of the video camera, wherein the plurality of health parameters include one or more health parameters that are indicative of the health of one or more hardware components of the video camera and one or more health parameters that are indicative of the health of one or more software components of the video camera. The health status algorithm is configured to send an alert onto the network via the network interface when one or more of the plurality of health parameters is found to cross a corresponding threshold.

Another example may be found in a building control device. The building control device includes a memory, a network interface for communicating with a building control system over a network, one or more sensors for sensing one or more sensed parameters, and a controller that is operatively coupled to the memory, the network interface, and the one or more sensors. The controller is configured to receive the one or more sensed parameters from the one or more sensors, generate an output based at least in part on the one or more sensed parameters, send the output onto the network via the network interface, and execute a health status algorithm. The health status algorithm is configured to monitor each of a plurality of health parameters associated with the operation of the building control device, wherein the plurality of health parameters include one or more health parameters that are indicative of the health of one or more hardware components of the building control device and one or more health parameters that are indicative of the health of one or more software components of the building control device. The health status algorithm is configured to send an alert onto the network via the network interface when one or more of the plurality of health parameters is found to cross a corresponding threshold.

Another example may be found in a video surveillance system (VMS). The video surveillance system includes a VMS server, a plurality of video cameras each for producing a video stream, and a network, where the plurality of video cameras are operatively coupled to the VMS server via the network. One or more of the video cameras are configured to monitor each of a plurality of health parameters associated with the operation of the corresponding video camera, wherein the plurality of health parameters include one or more health parameters that are indicative of the health of one or more hardware components of the corresponding video camera and one or more health parameters that are indicative of the health of one or more software components of the corresponding video camera, and to send a maintenance alert to the VMS server when one or more of the plurality of health parameters is found to cross a corresponding threshold. One or more the plurality of video cameras are not configured to monitor each of a plurality of health parameters associated with the operation of the corresponding video camera, wherein the plurality of health parameters include one or more health parameters that are indicative of the health of one or more hardware components of the corresponding video camera and one or more health parameters that are indicative of the health of one or more software components of the corresponding video camera. For these video cameras, the VMS server is configured to perform one or more of: a pixel analysis on the video stream received from the corresponding video camera to determine when a pixel variation over time falls below a threshold, and when the pixel variation over time falls below the threshold, issue a maintenance alert for the corresponding video camera; a request requesting process identification (PID) information from the corresponding video camera over time and monitoring for changes in the PIDs over time, and when one or more of the PIDs is not present for at least a threshold time, issue a maintenance alert for the corresponding video camera; and a request requesting a memory utilization and/or a CPU utilization over time, and storing historical memory utilization and/or CPU utilization, and when the memory utilization and/or CPU utilization goes above a threshold that is based at least in part on the storing historical memory utilization and/or CPU utilization, issue a maintenance alert for the corresponding video camera.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative building control device;
Figure 2 is a schematic block diagram showing an illustrative video camera;
Figure 3 is a schematic block diagram showing an illustrative PTZ video camera;
Figure 4 is a perspective view of an illustrative PTZ video camera;
Figure 5 is a schematic view of an illustrative video surveillance system;
Figure 6 is a flow diagram showing an illustrative method;
Figure 7 is a flow diagram showing an illustrative method;
Figure 8 is a flow diagram showing an illustrative method;
Figure 9 is a schematic block diagram; and
Figure 10 is an illustrative screen shot of a monitoring tool.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

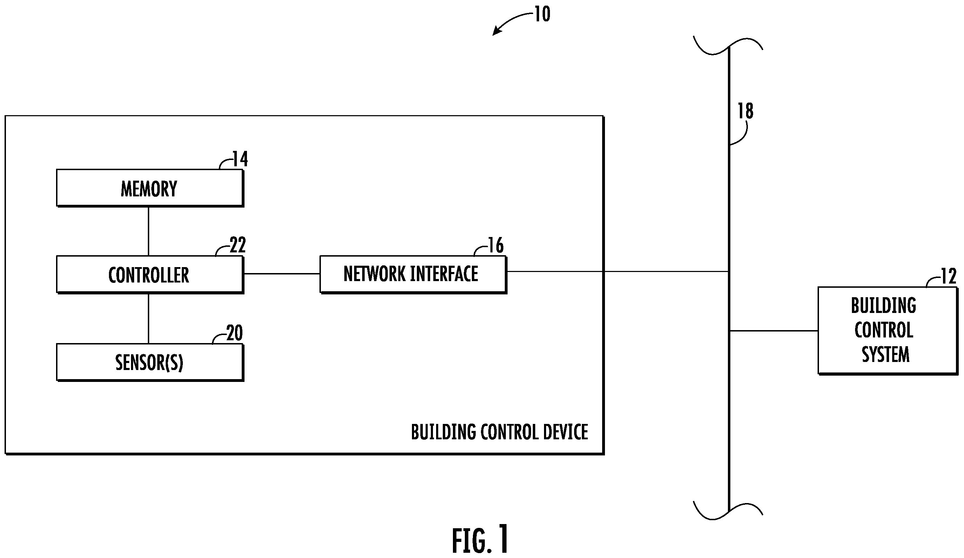

Figure 1 is a schematic block diagram showing an illustrative building control device 10 that is part of, or may communicate with, a building control system 12. The building control device 10 may be any of a variety of different types of building control devices. For example, the building control device 10 may represent a video camera such as a PTZ (Pan Tilt Zoom) camera that is able to adjust any of its pan, its tilt and its zoom. As another example, the building control system 12 may include an access control system, and the building control device 10 may be an access control panel of the access control system. The building control system 12 may be a fire system, for example, and the building control device 10 may be a fire panel of the fire system. As another example, the building control system 12 may be an HVAC (Heating, Ventilating and Air Conditioning) system, and the building control device 10 may be an HVAC panel of the HVAC system. These are just example building control devices.

The building control device 10 includes a memory 14. The building control device 10 includes a network interface 16 that is configured for communicating with the building control system 12 over a network 18. The network 18 may be a wired or a wireless network, for example. The building control device 10 includes one or more sensors 20 for sensing one or more parameters. It will be appreciated that the one or more sensors 20 may be any of a variety of different types of sensors, depending on the type of the building control system 12 (and hence the building control device 10). The one or more sensors 20 may include, for example, an access card reader, or perhaps an access control system video camera, when the building control system 12 is an access control system. The one or more sensors 20 may include a smoke detector when the building control system 12 is a fire system. The one or more sensors 20 may include a temperature sensor, a humidity sensor, or an air quality sensor when the building control system 12 is an HVAC system. These are just examples.

A controller 22 is operatively coupled to the memory 14, the network interface 16 and the one or more sensors 20. The controller 22 is configured to receive the one or more sensed parameters from the one or more sensors 20 and to generate an output that is based at least in part on the one or more sensed parameters. The controller 22 is configured to send the output onto the network 18 via the network interface 16. The controller 22 is also configured to execute a health status algorithm. In some instances, the health status algorithm is configured to monitor each of a plurality of health parameters associated with the operation of the building control device 10, wherein the plurality of health parameters include one or more health parameters that are indicative of the health of one or more hardware components of the building control device 10 and one or more health parameters that are indicative of the health of one or more software components of the building control device 10. The health status algorithm is configured to send an alert onto the network 18 via the network interface 16 when one or more of the plurality of health parameters is found to cross a corresponding threshold. The alert may include a value or values of the plurality of health parameters that have crossed the corresponding threshold. The alert may include an indication of how far out of range one or more of the plurality of health parameters are. The alert may include a descriptor or color indicating the severity of an alert. Descriptors may include, for example, "WARNING" for a less severe problem or "CRITICAL WARNING" for a more severe problem. The color may include yellow for a less severe problem or red for a more severe problem, for example.

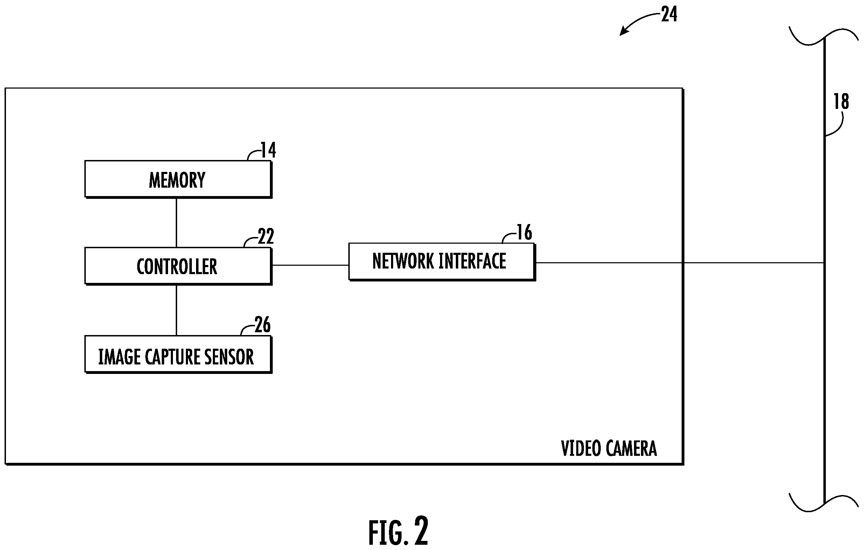

Figure 2 is a schematic block diagram showing an illustrative video camera 24. In some cases, the illustrative video camera 24 may be a fixed camera, meaning that its field of view is fixed. In some cases, the video camera 24 may be a Pan, Tilt, Zoom (PTZ) video camera that is able to adjust its field of view. The video camera 24 includes the memory 14 and the network interface 16 that is configured to communicate over the network 18. The network 18 may be a wired or a wireless network, for example. The video camera 24 includes an image capture sensor 26 for capturing a video stream. The controller 22 is operatively coupled to the memory 14, the network interface 16 and the one or more sensors 20. The controller 22 is configured to receive the video stream from the image capture sensor 26 and to generate an output that is based at least in part on the video stream. The output may include the video stream and/or one or more alerts based on the video stream. The controller 22 is configured to send the output onto the network 18 via the network interface 16.

The controller 22 is also configured to execute a health status algorithm. In some instances, the health status algorithm is configured to monitor each of a plurality of health parameters associated with the operation of the video camera 24, wherein the plurality of health parameters include one or more health parameters that are indicative of the health of one or more hardware components of the video camera 24 and one or more health parameters that are indicative of the health of one or more software components of the video camera 24. The health status algorithm is configured to send an alert onto the network 18 via the network interface 16 when one or more of the plurality of health parameters is found to cross a corresponding threshold. The term "cross" can be interpreted as momentary crossing (e.g. exceeding) the corresponding threshold, crossed for at least a period of time (e.g. exceeded for at least one minute), or otherwise having met a predefined threshold criteria.

In some cases, the alert may include a value or values of the plurality of health parameters that have crossed the corresponding threshold. The alert may include an indication of how far out of range one or more of the plurality of health parameters are. The alert may include a descriptor or color indicating the severity of a problem. Descriptors may include "WARNING" for a less severe problem or "CRITICAL WARNING" for a more severe problem. The color may include yellow for a less severe problem or red for a more severe problem, for example.

In some instances, the plurality of health parameters that are indicative of the health of one or more hardware components of the video camera 24 may include one or more of a sensed light intensity of one or more pixels of one or more frames of the video stream captured by the video camera, and a sensed image sharpness of one or more image frames of the video stream. When the sensed light intensity of one or more pixels of one or more frames of the video stream (e.g. average of pixels of one or more frames) is found to cross a corresponding threshold, the controller 22 may be configured to send an alert onto the network 18 via the network interface 16 indicating that a transparent dome of the video camera 24 may be dirty and needs maintenance and/or an infrared light source of the video camera 24 used for illuminating a scene needs maintenance. In some cases, the plurality of health parameters that are indicative of the health of one or more hardware components of the video camera 24 may include a packet loss parameter indicating a packet loss rate during communication over the network via the network interface, and when the packet loss parameter is found to cross a corresponding threshold, the controller 22 may be configured to send an alert onto the network 18 via the network interface 16 indicating a connection via the network 18 needs maintenance (e.g. problem with network cable connector).

In some cases, the plurality of health parameters that are indicative of the health of one or more software components of the video camera 24 may include a health status parameter associated with a number of times that the video camera 24 has been rebooted over a predetermined period of time. In some instances, the plurality of health parameters that are indicative of the health of one or more software components of the video camera 24 may include a health status parameter that indicates whether the firmware of the video camera 24 is up-to-date or not.

In some cases, the controller 22 executes a plurality of software processes each with a corresponding process identifier (PID), wherein the plurality of health parameters that are indicative of the health of one or more software components of the video camera 24 may include a health status parameter associated with each of the plurality of software processes. Each health status parameter may include a normal health status condition and a hung health status condition. In some cases, when a PID for a particular process is terminated, and another PID appears for the particular process, this may indicate that the particular process is crashing and restarting. In some cases when a PID for a particular process has CPU and/or memory usage that exceeds certain thresholds, the particular process may be hung. Example video camera services each having one or more processes may include, but are not limited to, a system service, a log manager, a Digital Signal Processing (DSP) service, an Input/Output (IO) control service, an Audio Visual (AV) service, a communicator service, a PTZ service, a network manager, a user manager, a firmware upgrade service, a media service, an RTSP service, a disk manager service, an event manager service, an HTTP streamer service, an Onvif service, a video analytics service, a health monitor service and a bonjour service.

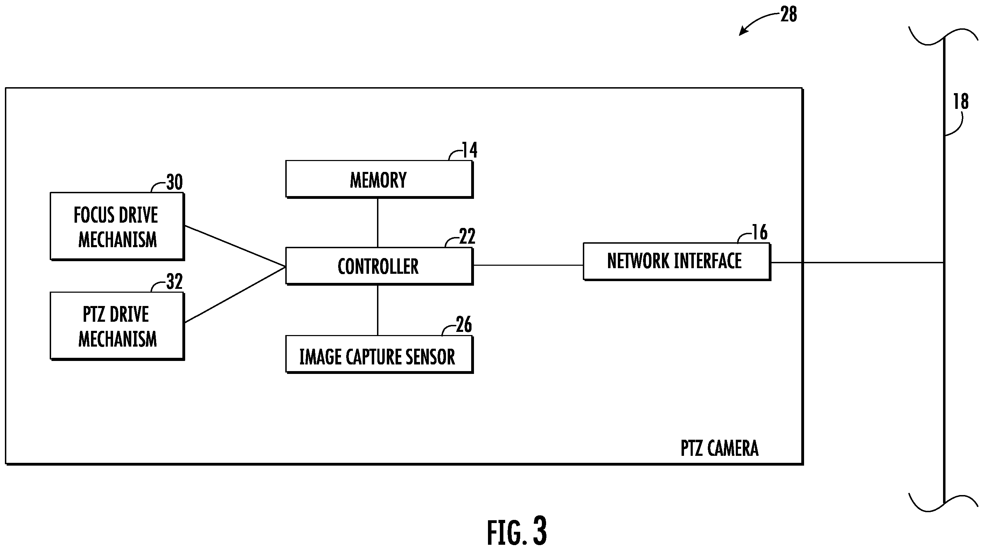

Figure 3 is a schematic block diagram showing an illustrative PTZ video camera 28. The PTZ video camera 28 includes the memory 14 and the network interface 16 that is configured to communicate over the network 18. The network 18 may be a wired or a wireless network, for example. The PTZ video camera 24 includes the image capture sensor 26 for capturing a video stream. The controller 22 is operatively coupled to the memory 14, the network interface 16 and the one or more sensors 20. The controller 22 is configured to receive the video stream from the image capture sensor 26 and to generate an output that is based at least in part on the video stream. The controller 22 is configured to send the output onto the network 18 via the network interface 16. In some cases, the output includes the video stream and/or one or more alerts that are based on the video stream.

The PTZ video camera 28 includes a focus drive mechanism 30 that is configured for mechanically changing a focus of the PTZ video camera 28, and a PTZ drive mechanism 32 that is configured for mechanically changing a PTZ position of the PTZ video camera. In some instances, the controller 22 is operatively coupled to the focus drive mechanism 30 and the PTZ drive mechanism 32 such that controller 22 is able to control the Focus, Pan, Tilt and Zoom of the PTZ video camera 28 and thus control the field of view of the PTZ video camera 28.

The controller 22 is configured to execute a health status algorithm. In some instances, the health status algorithm is configured to monitor each of a plurality of health parameters associated with the operation of the PTZ video camera 28, wherein the plurality of health parameters include one or more health parameters that are indicative of the health of one or more hardware components of the PTZ video camera 28 and one or more health parameters that are indicative of the health of one or more software components of the PTZ video camera 28. The health status algorithm is configured to send an alert onto the network 18 via the network interface 16 when one or more of the plurality of health parameters is found to cross a corresponding threshold. The alert may include a value or values of the plurality of health parameters that have crossed the corresponding threshold. The alert may include an indication of how far out of range one or more of the plurality of health parameters are. The alert may include a descriptor or color indicating the severity of a problem. Descriptors may include "WARNING" for a less severe problem or "CRITICAL WARNING" for a more severe problem. The color may include yellow for a less severe problem or red for a more severe problem, for example.

In some instances, the plurality of health parameters that are indicative of the health of one or more hardware components of the PTZ video camera 28 may include one or more of a sensed hardware degradation in the performance of the focus drive mechanism 30 and/or a sensed hardware degradation in the performance of the PTZ drive mechanism 32. In some cases, the plurality of health parameters that are indicative of the health of one or more hardware components of the PTZ video camera 28 may include one or more of a sensed light intensity of one or more pixels of one or more frames (e.g. an average of the sensed light intensity of the pixels in one or more frames) of the video stream, and a sensed image sharpness of one or more image frames of the video stream.

When the sensed light intensity of one or more pixels of one or more frames of the video stream (e.g. average of pixels of one or more frames) is found to cross a corresponding threshold, the controller 22 may be configured to send an alert onto the network 18 via the network interface 16 indicating that a transparent dome of the video camera 24 may be dirty and needs maintenance and/or an infrared light source of the video camera 24 used for illuminating a scene needs maintenance. When the sensed image sharpness of one or more frames of the video stream is found to cross a corresponding threshold, the controller 22 may be configured to send an alert onto the network 18 via the network interface 16 indicating one or more of: the transparent dome of the PTZ video camera 28 needs maintenance; and the focus drive mechanism 30 of the PTZ video camera 28 needs maintenance. In some cases, the plurality of health parameters that are indicative of the health of one or more hardware components of the video camera 24 may include a packet loss parameter indicating a packet loss rate during communication over the network via the network interface, and when the packet loss parameter is found to cross a corresponding threshold, the controller 22 may be configured to send an alert onto the network 18 via the network interface 16 indicating a connection via the network 18 needs maintenance (e.g. problem with network cable connector).

In some cases, the plurality of health parameters that are indicative of the health of one or more software components of the PTZ video camera 28 may include a health status parameter associated with a number of times that the PTZ video camera 28 has been rebooted over a predetermined period of time. In some instances, the plurality of health parameters that are indicative of the health of one or more software components of the PTZ video camera 28 may include a health status parameter that indicates whether the firmware of the PTZ video camera 28 is up-to-date or not.

In some cases, the controller 22 executes a plurality of software processes each with a corresponding process identifier (PID), wherein the plurality of health parameters that are indicative of the health of one or more software components of the video camera 24 may include a health status parameter associated with each of the plurality of software processes. Each health status parameter may include a normal health status condition and a hung health status condition. In some cases, when a PID for a particular process is terminated, and another PID appears for the particular process, this may indicate that the particular process is crashing and restarting. In some cases when a PID for a particular process has CPU and/or memory usage that exceeds certain thresholds, the particular process may be hung. Example video camera services each having one or more processes may include, but are not limited to, a system service, a log manager, a Digital Signal Processing (DSP) service, an Input/Output (IO) control service, an Audio Visual (AV) service, a communicator service, a PTZ service, a network manager, a user manager, a firmware upgrade service, a media service, an RTSP service, a disk manager service, an event manager service, an HTTP streamer service, an Onvif service, a video analytics service, a health monitor service and a bonjour service.

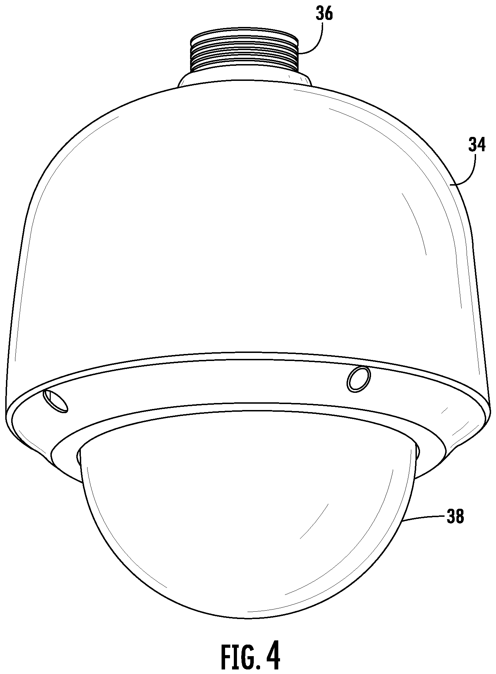

Figure 4 is a perspective view of the illustrative PTZ video camera 28. The PTZ video camera 28 includes a housing 34 that may include a mounting feature 36. While a threaded mounting feature 36 is shown, this is merely illustrative, as the housing 34 may be configured to be mounted in position, such as to a mounting bracket, in any of a variety of different ways. The illustrative PTZ video camera 28 includes a globe 38 that extends downward (in the illustrated orientation) beyond the housing 34. In some instances, the globe 38 may be formed of a transparent or at least a substantially transparent material so that a camera lens and image capture sensor 26 that is disposed within the globe 38 is able to view scenery and events that are outside of the PTZ video camera 28. The globe 38 may help protect the camera components inside of the housing 34 from the external environment and tampering.

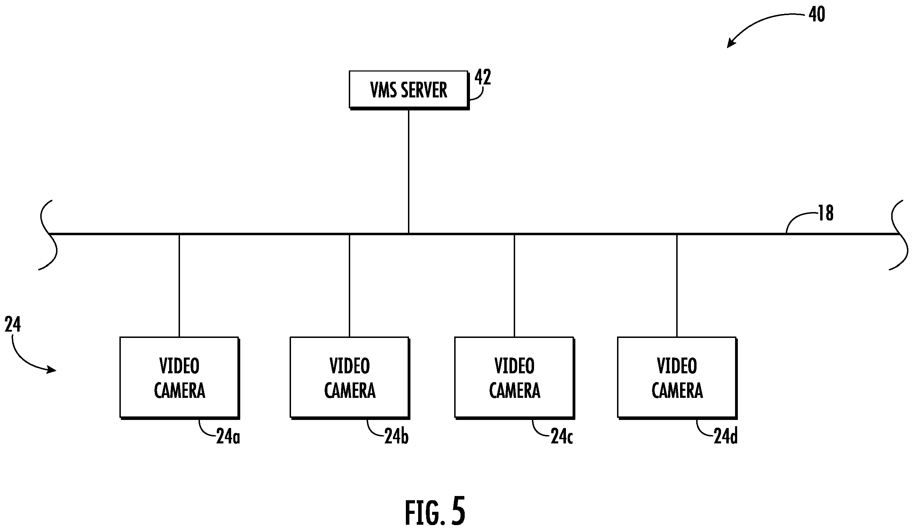

Figure 5 is a schematic block diagram showing an illustrative video surveillance system 40. The illustrative video surveillance system 40 includes a VMS (Video Management System) server 42 that is operatively coupled to the network 18. The video surveillance system 40 also includes a number of the video cameras 24, individually labeled as 24a, 24b, 24c and 24d. While a total of four video cameras 24 are shown, this is merely illustrative, as any number of video cameras 24 may be included. Each of the video cameras 24 are configured to produce a video stream. Each of the video cameras 24 are operatively coupled with the network 18, and thus each of the video cameras 24 are able to share video streams with the VMS server 42 via the network 18.

Some of the video cameras 24 may have capabilities that others of the video cameras 24 do not have. In some cases, one or more of the video cameras 24 are configured to monitor each of a plurality of health parameters associated with the operation of the corresponding video camera 24, wherein the plurality of health parameters include one or more health parameters that are indicative of the health of one or more hardware components of the corresponding video camera 24 and one or more health parameters that are indicative of the health of one or more software components of the corresponding video camera 24. One or more of the video cameras 24 may also be configured to send a maintenance alert to the VMS server when one or more of the plurality of health parameters is found to cross a corresponding threshold.

In some cases, one or more of the video cameras 24 may be configured to perform a pixel analysis on the video stream captured by the corresponding video camera to determine when a particular pixel does not very over time in the video stream (e.g. the pixel variation over time falls below a threshold). When the pixel variation for each of one or more pixels falls below the threshold, the video camera 24 may issue a maintenance alert for the corresponding video camera.

One or more of the video cameras 24 may be configured to identify process identification (PID) information of the corresponding video camera over time and monitor for changes in the PIDs over time. When it is detected that one or more of the PIDs is not present for at least a threshold time, the corresponding video camera 24 may issue a maintenance alert for the corresponding video camera 24. One or more of the video cameras 24 may be configured to identify a memory utilization and/or a CPU utilization over time for the corresponding video camera 24, and store historical memory utilization and/or CPU utilization. When the memory utilization and/or CPU utilization of the corresponding video camera 24 goes above a threshold utilization that is based at least in part on the stored historical memory utilization and/or CPU utilization, the corresponding video camera 24 may issue a maintenance alert for the corresponding video camera 24.

In some cases, the VMS server 42 may be configured to perform a pixel analysis on the video stream received from the corresponding video camera to determine when a particular pixel does not very over time in the video stream (e.g. the pixel variation over time falls below a threshold). When the pixel variation for each of one or more pixels falls below the threshold, the VMS server may issue a maintenance alert for the corresponding video camera.

In some cases, the VMS server 42 may be configured to perform a request requesting process identification (PID) information from each of video cameras over time and monitoring for changes in the PIDs over time. When it is detected that one or more of the PIDs is not present for at least a threshold time, the VMS server may issue a maintenance alert for the corresponding video camera 24. The VMS server 42 may be configured to perform a request requesting a memory utilization and/or a CPU utilization over time for each of the video cameras, and storing historical memory utilization and/or CPU utilization. When the memory utilization and/or CPU utilization goes above a threshold that is based at least in part on the stored historical memory utilization and/or CPU utilization, the VMS server 42 may issue a maintenance alert for the corresponding video camera 24.

In some instances, the VMS server 42 may be configured to automatically issue one or more commands to a video camera 24 in response to receiving a maintenance alert for the corresponding video camera 24. In some cases, the one or more commands may be selected based on a content of the maintenance alert.

In some cases, a camera may be live streaming properly, but the video analytics process may be down. In this instance, an operator at a Central Monitoring Station may see the live stream from the camera but will be unaware that the video analytics process in the camera is not running and is not identifying and reporting alerts identified by the video analytics process. In this instance, the health status algorithm of the video camera will identify that the video analytics process is not operating properly, and will report to the operator at the Central Monitoring Station that the video analytics process needs attention. In some cases, the health status algorithm will automatically restart the video analytics process.

The health status algorithm may be used to identify damage to the outer dome 38 of the camera. The damage may include a crack, or the outer dome 38 may be wet, foggy or otherwise not clear. The health status algorithm may use one or more internal temperature sensors to identify whether a camera fan and/or heater require maintenance.

The health status algorithm may be used to identify when a focus motor and/or a PTZ mechanism is not working properly. In some cases, the health status algorithm may monitor the voltage, current, speed and/or range of movement of the focus and/or the PTZ mechanism during an active focus and/or pan/tilt/zoom operation. The health status algorithm may issue an alert when the voltage, current, speed and/or range of movement of the focus motor and/or a PTZ mechanism fall outside of a predefined range. Alternatively, or in addition, the health status algorithm may monitor the video stream during an active focus and/or pan/tilt/zoom operation, and issue an alert when one or more characteristics of the video stream fall outside of a predefined range. For example, if the video frames of the video stream do not change during an active focus and/or pan/tilt/zoom operation, it may be determined that the focus motor and/or the PTZ mechanism is in inoperable.

The health status algorithm may be automatically run on a schedule, such as one or two times per day. Between runs, the health status algorithm may be terminated or maintained in a background or sleep state so as to not consume resources of the video camera. In some cases, the health status algorithm may run continuously to monitor for health parameters associated with the operation of the video camera in real or near real time.

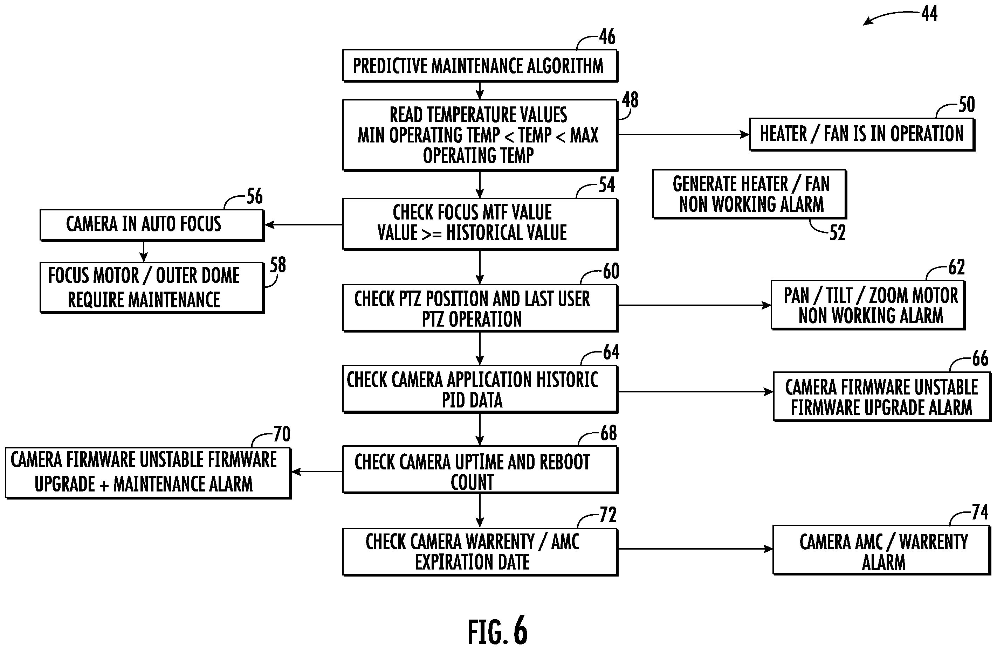

Figure 6 is a flow diagram showing an illustrative method 44 for operating a video camera. The method 44 includes executing a predictive maintenance algorithm on a video camera, as indicated at block 46. Temperature values detected by temperature sensor inside of the video camera housing are read, as indicated at block 48. In some cases, if the sensed temperatures are elevated above a threshold, a heater or a fan servicing the video camera may not be operating properly, as indicated at block 50. In some cases, this may indicate that the heater or fan is not operating, and an alarm may be raised, as indicated at block 52.

Focus values of the video camera are checked, as indicated at block 54. Camera auto focus is checked, as indicated at block 56. In some cases, this may result in a focus motor or outer dome maintenance request, as indicated at block 58. PTZ position is checked, as indicated at block 60. In some cases, this can result in a PTZ alarm, as indicated at block 62. The camera data is checked, as indicated at block 64. In some cases, this can result in a firmware alarm, as indicated at block 66. Camera uptime is checked, as indicated at block 68. In some cases, this can result in a firmware update alarm, as indicated at block 70. Warranty information is checked, as indicated at block 72. This may result in a warranty alarm, as indicated at block 74.

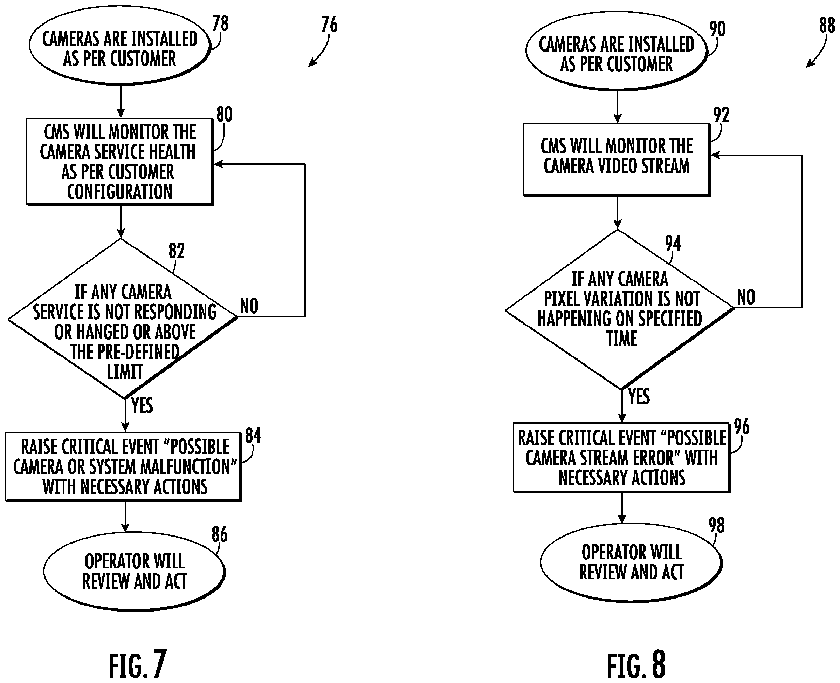

Figure 7 is a block diagram showing an illustrative method 76. Cameras are installed, as indicated at block 78. The health of the cameras is monitored, as indicated at block 80. A determination is made as to whether any camera services are not responding or are hung longer than a predefined threshold limit, as indicated at decision block 82. Example video camera services each having one or more processes may include, but are not limited to, a system service, a log manager, a Digital Signal Processing (DSP) service, an Input/Output (IO) control service, an Audio Visual (AV) service, a communicator service, a PTZ service, a network manager, a user manager, a firmware upgrade service, a media service, an RTSP service, a disk manager service, an event manager service, an HTTP streamer service, an Onvif service, a video analytics service, a health monitor service and a bonjour service. If not, control reverts back to block 80. If so, control passes to block 84 and a critical event alarm is raised. An operator will then review and possibly take action, as indicated at block 86.

Figure 8 is a block diagram showing an illustrative method 88. Cameras are installed, as indicated at block 90. The camera video streams are monitored, as indicated at block 92. A determination is made as to whether there are no camera pixel variations (e.g. whether a particular pixel varies) over a period of time (e.g. over two or more video frames), as indicated at decision block 94. If there are camera pixel variations, control reverts back to block 92. If there are no camera pixel variations over the period of time, control passes to block 96 and a camera stream error is raised, as indicated at block 96. The camera stream error may indicate that the video stream from the camera is the same unchanging frame. An operator will then review and possibly take action, as indicated at block 98.

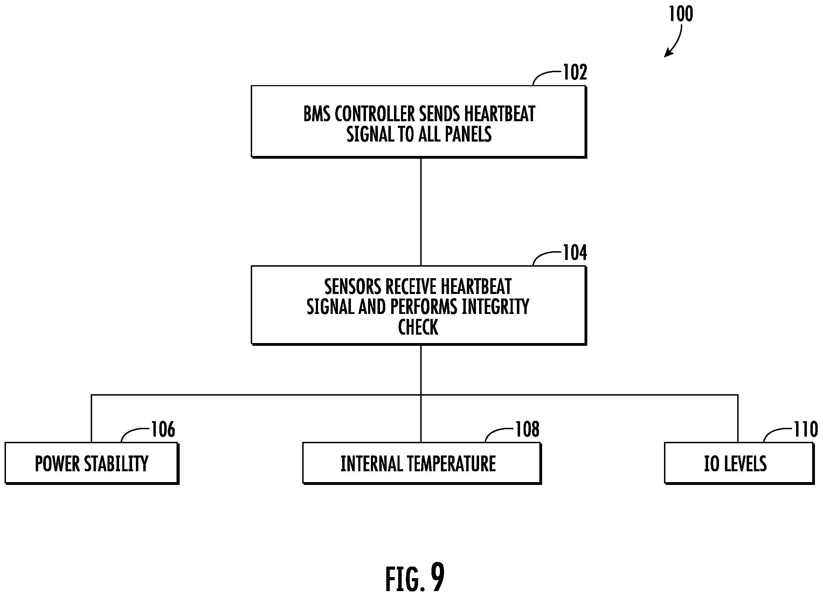

Figure 9 is a schematic block diagram 100. A BMS controller sends heartbeat signals to all panels, as indicated at block 102. The sensors receive the heartbeat signals and perform integrity checks, as indicated at block 104. The integrity checks include determining whether power is stable, as indicated at block 106. The integrity checks include determining whether internal temperatures of the panels are within range, as indicated at block 108. The integrity checks include determining whether the logic level of the output (e.g. logic levels of a door open/close output of an access control door panel) is proper, as indicated at block 110. An alarm is issued when one or more of the integrity checks detects an operating condition that is out of a predefined range.

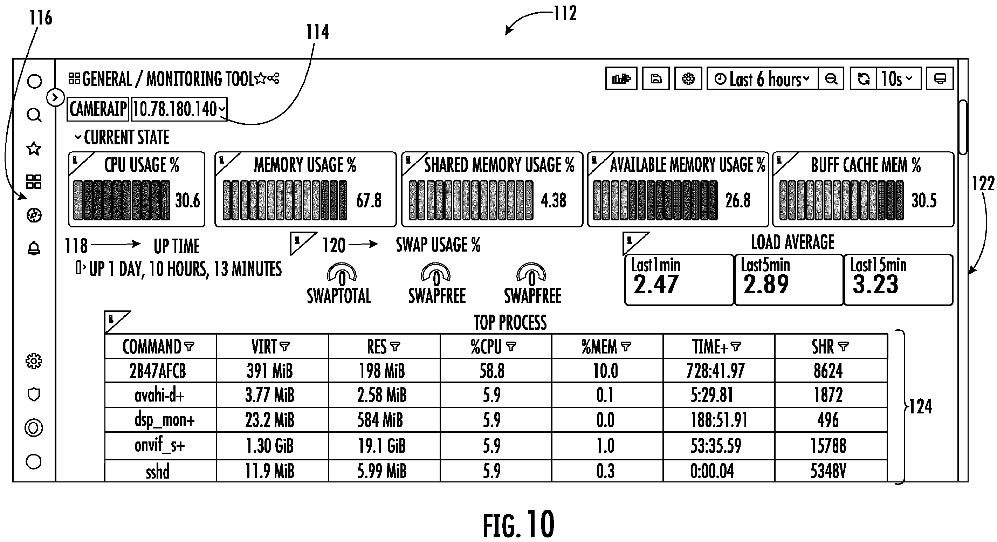

Figure 10 is a screen capture showing an illustrative screen 112 that may be displayed. In this example, the screen 112 includes an IP address 114 for a particular video camera. In some cases, this may include a pull-down menu that allows a user to select any particular video camera of a building control system. The screen 112 includes a current state section 116 that displays parameter values such as CPU usage, memory usage, shared memory usage, available memory usage and buffer cache memory percentage of the selected video camera. The screen 112 includes an UP time section 118, a Swap Usage section 120 and a load average section 122. The screen 112 also includes an additional data section 124 providing additional data. The additional data may identify various processes running in the particular video camera along with various parameters associated with each of the running processes such as CPU usage, memory usage and process UP time. The system may automatically issue alerts when one or more of these parameters falls outside of a predefined range. The predefined "range" can be a one-sided range (e.g. defining a lower range limit but not a higher range limit) or a two-sided range (e.g. defining a lower range limit and a higher range limit).

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A video camera comprising:
a memory;
a network interface for communicating over a network;
an image capture sensor for capturing a video stream;
a housing;
a controller operatively coupled to the memory, the network interface and the image capture sensor, the controller configured to:
receive the video stream from the image capture sensor;
generate an output based at least in part on the video stream;
send the output onto the network via the network interface;
execute a health status algorithm, wherein the health status algorithm is configured to:
monitor each of a plurality of health parameters associated with the operation of the video camera, wherein the plurality of health parameters include one or more health parameters that are indicative of the health of one or more hardware components of the video camera and one or more health parameters that are indicative of the health of one or more software components of the video camera; and
send an alert onto the network via the network interface when one or more of the plurality of health parameters is found to cross a corresponding threshold.

2. The video camera of claim 1, wherein the video camera is a Pan/Tilt/Zoom (PTZ) video camera comprising:
a focus drive mechanism for mechanically changing a focus of the PTZ video camera;
a PTZ drive mechanism for mechanically changing a PTZ position of the PTZ video camera;
a transparent dome for protecting the image capture sensor; and
wherein the controller is further operatively coupled to the focus drive mechanism and the PTZ drive mechanism.

3. The video camera of claim 2, wherein the plurality of health parameters that are indicative of the health of one or more hardware components of the PTZ video camera include one or more of a sensed hardware degradation in the performance of the focus drive mechanism and a sensed hardware degradation in the performance of the PTZ drive mechanism.

4. The video camera of claim 2, wherein the plurality of health parameters that are indicative of the health of one or more hardware components of the PTZ video camera include one or more of a sensed light intensity of one or more pixels of one or more frames of the video stream and a sensed image sharpness of one or more image frames of the video stream, and wherein when the sensed image sharpness of one or more frames of the video stream is found to cross a corresponding threshold, the controller is configured to send an alert onto the network via the network interface indicating one or more of: the transparent dome of the video camera needs maintenance; and the focus drive mechanism of the PTZ video camera needs maintenance.

5. The video camera of claim 1, wherein the plurality of health parameters that are indicative of the health of one or more hardware components of the video camera include one or more of a sensed light intensity of one or more pixels of one or more frames of the video stream and a sensed image sharpness of one or more image frames of the video stream.

6. The video camera of claim 5, wherein when the sensed light intensity of one or more pixels of one or more frames of the video stream is found to cross a corresponding threshold, the controller is configured to send an alert onto the network via the network interface indicating one or more of: a transparent dome of the video camera needs maintenance; and an infrared light source of the video camera used for illuminating a scene needs maintenance.

7. The video camera of claim 1, wherein the plurality of health parameters that are indicative of the health of one or more hardware components of the video camera include a packet loss parameter indicating a packet loss rate during communication over the network via the network interface, and when the packet loss parameter is found to cross a corresponding threshold, the controller is configured to send an alert onto the network via the network interface indicating a connection via the network needs maintenance.

8. The video camera of claim 1, wherein the controller of the video camera executes a plurality of software processes each with a corresponding process identifier (PID), wherein the plurality of health parameters that are indicative of the health of one or more software components of the video camera include a health status parameter associated with each of the plurality of software processes, wherein each health status parameter includes a normal health status condition and a hung health status condition.

9. The video camera of claim 8, wherein the plurality of software processes include a video analytics software process that performs a video analytics algorithm on the video stream.

10. The video camera of claim 1, wherein the plurality of health parameters that are indicative of the health of one or more software components of the video camera include one or more of:
a health status parameter associated with a number of times that the video camera has been rebooted over a predetermined period of time; and
a health status parameter that indicates whether the firmware of the video camera is up-to-date or not.

11. A method performed by a video camera, the method comprising:
receiving a video stream from an image capture sensor of the video camera;
generating an output based at least in part on the video stream;
sending the output onto ae network via a network interface of the video camera;
executing a health status algorithm, wherein the health status algorithm:
monitoring each of a plurality of health parameters associated with the operation of the video camera, wherein the plurality of health parameters include one or more health parameters that are indicative of the health of one or more hardware components of the video camera and one or more health parameters that are indicative of the health of one or more software components of the video camera; and
sending an alert onto the network via the network interface when one or more of the plurality of health parameters is found to cross a corresponding threshold.

12. The method of claim 11, wherein the video camera is a Pan/Tilt/Zoom (PTZ) video camera, and wherein the plurality of health parameters that are indicative of the health of one or more hardware components of the PTZ video camera include one or more of a sensed hardware degradation in the performance of a focus drive mechanism of the PTZ video camera and a sensed hardware degradation in the performance of a PTZ drive mechanism of the PTZ video camera.

13. The method of claim 12, wherein the plurality of health parameters that are indicative of the health of one or more hardware components of the PTZ video camera include one or more of a sensed light intensity of one or more pixels of one or more frames of the video stream and a sensed image sharpness of one or more image frames of the video stream, and wherein when the sensed image sharpness of one or more frames of the video stream is found to cross a corresponding threshold, the sending an alert onto the network via the network interface indicating one or more of: the transparent dome of the video camera needs maintenance; and the focus drive mechanism of the PTZ video camera needs maintenance.

14. The method of claim 11, wherein the plurality of health parameters that are indicative of the health of one or more software components of the video camera include a health status parameter associated with each of one or more of a plurality of software processes that each have a corresponding process identifier (PID), wherein each health status parameter includes a normal health status condition and a hung health status condition.

15. A method of claim 11, wherein the plurality of health parameters that are indicative of the health of one or more software components of the video camera include one or more of:
a health status parameter associated with a number of times that the video camera has been rebooted over a predetermined period of time; and
a health status parameter that indicates whether the firmware of the video camera is up-to-date or not.
